(19) Europäisches Patentamt
European Patent Office
Office européen des brevets

(11) **EP 3 113 875 B1**

(12) **FASCICULE DE BREVET EUROPEEN**

(45) Date de publication et mention
de la délivrance du brevet:
**23.10.2019 Bulletin 2019/43**

(51) Int Cl.:
***B01J 13/00*** *(2006.01)*

(21) Numéro de dépôt: **15708246.2**

(22) Date de dépôt: **09.03.2015**

(86) Numéro de dépôt international:
**PCT/EP2015/054859**

(87) Numéro de publication internationale:
**WO 2015/132418 (11.09.2015 Gazette 2015/36)**

(54) **PROCEDE DE FABRICATION D'AEROGELS PAR CHAUFFAGE DIELECTRIQUE**

VERFAHREN ZUR HERSTELLUNG VON AEROGELE DURCH DIELEKTRISCHE ERWARMUNG

PROCESS OF PREPARING AEROGEL BY ELECTROMAGNETIC HEATING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.03.2014 FR 1451910**

(43) Date de publication de la demande:
**11.01.2017 Bulletin 2017/02**

(73) Titulaire: **Enersens**
**91160 Longjumeau (FR)**

(72) Inventeurs:
• **BONNARDEL, Pierre-Antoine**
**F-91190 Gif S/Yvette (FR)**
• **CHAUSSON, Sophie**
**F-69100 Villeurbanne (FR)**

(74) Mandataire: **Regimbeau**
**20, rue de Chazelles**
**75847 Paris Cedex 17 (FR)**

(56) Documents cités:
**WO-A1-96/20822      WO-A1-2012/147002
US-A1- 2007 119 344    US-A1- 2012 112 388**

• **J.A. MENÉNDEZ ET AL: "A microwave-based method for the synthesis of carbon xerogel spheres", CARBON, vol. 50, no. 10, 21 mars 2012 (2012-03-21) , pages 3555-3560, XP055139058, ISSN: 0008-6223, DOI: 10.1016/j.carbon.2012.03.027**
• **WEN ZHI ZHENG ET AL: "The Microwave-Assisted Preparation and Properties of SiO<sub>2</sub> Aerogels by Fractional Modification", ADVANCED MATERIALS RESEARCH, vol. 148-149, 1 October 2010 (2010-10-01), pages 1152-1162, XP055471064, DOI: 10.4028/www.scientific.net/AMR.148-149.115 2**

**Description**

La présente invention concerne la fabrication des matériaux isolants de type aérogel.

L'économie d'énergie, et plus particulièrement l'isolation thermique, se trouvent aujourd'hui au coeur des problématiques des industriels et dans le bâtiment.

L'isolation thermique est obtenue traditionnellement par l'usage de laine de verre, de roche, de polystyrène expansé ou polystyrène extrudé, souvent combinés dans des systèmes d'isolation industrielle d'une part, et pour le bâtiment d'autre part. La performance en isolation thermique des matériaux est mesurée par leur conductivité thermique. Plus la valeur de la conductivité thermique est basse, moins le matériau conduit la chaleur et plus l'isolation thermique est bonne.

C'est dans ce cadre qu'ont été développés les isolants à base d'aérogels et de xérogels. Aussi bien les aérogels et que les xérogels sont très intéressants non seulement pour leur qualité d'isolants thermiques et acoustiques, mais aussi pour leur faible densité. Ils peuvent être obtenus sous forme granulaire ou monolithiques. Ils peuvent également se présenter sous forme de matériaux composites renforcés par des matériaux tels que des mousses ou des matériaux fibreux.

Les aérogels et xérogels peuvent être décrits comme un type particulier de gels. Un gel comporte une structure continue tridimensionnelle poreuse. On distingue, selon la nature du fluide présent dans les pores du gel, les aérogels et xérogels (air), les hydrogels (eau), les organogels (solvant organique), en particulier les alcogels (alcool). L'ensemble des termes hydrogels, alcogels et organogels sont rassemblés sous la dénomination plus générale de lyogels. Les aérogels et xérogels sont en général obtenus par séchage d'un lyogel.

Traditionnellement, le terme aérogel se réfère de manière générale à un gel séché dans des conditions supercritiques, c'est-à-dire que le solvant majoritaire est à l'état de fluide supercritique dans ces conditions de séchage, tandis que le terme xérogel se réfère à un gel séché dans des conditions subcritiques, c'est-à-dire que le solvant majoritaire n'est pas à l'état de fluide supercritique dans ces conditions. Toutefois, dans la suite, on englobera sous le terme « aérogel » à la fois les aérogels et les xérogels, à fins de simplification.

Traditionnellement, la préparation d'un gel implique une étape de transition sol-gel, c'est-à-dire le passage du sol - suspension de particules solides dans un solvant - à un matériau gélatineux présentant une structure tridimensionnelle en réseau d'apparence solide, le gel. Les aérogels sont ainsi généralement obtenus à l'aide de procédés de fabrication comprenant les étapes suivantes :

1) formation d'un sol, notamment par hydrolyse et condensation de précurseurs dans un solvant ;
2) gélification, suivie du
3) vieillissement, ces deux étapes menant à la formation d'un lyogel ;
4) éventuellement hydrophobisation, menant à un lyogel hydrophobé ;
5) séchage (subcritique ou supercritique), menant à l'aérogel.

L'étape 3) de vieillissement se traduit par des modifications physico-chimiques qui ont lieu après la gélification. Lorsque le gel vieillit, le phénomène de réticulation conduit au rétrécissement du matériau avec expulsion du solvant : on parle alors de « synérèse ». Le vieillissement permet d'améliorer les propriétés mécaniques du gel sous l'effet des mécanismes de synérèse (séparation du liquide et du gel). Or, cette étape dure en général plusieurs heures. Notamment, dans le cas d'un alcogel de silice dont le solvant est l'éthanol, la durée de vieillissement au reflux de l'éthanol à pression atmosphérique est d'environ 3 heures. Cette durée est nécessaire pour que l'aérogel obtenu en fin de procédé offre les performances mécaniques et thermiques souhaitées. Un tel procédé de préparation est par exemple illustré dans la demande FR 2 873 677 (fabrication de granules) ou WO 2013/053951 (fabrication de granules ou de panneau autoportants).

Ainsi, un procédé de fabrication traditionnel permet d'obtenir un lyogel (éventuellement hydrophobé) en un minimum de 8 heures, durée à laquelle il convient d'ajouter celle du séchage. Si la durée d'obtention du lyogel est inférieure, la durée de l'étape de vieillissement notamment sera insuffisante pour obtenir un aérogel présentant des performances mécaniques et thermiques satisfaisantes.

Il existe donc un besoin pour réduire le temps global de production des aérogels. Plusieurs solutions ont été proposées dans l'art antérieur.

Par exemple, la demande de brevet américain US 2004/0087670 décrit un procédé de production d'aérogels rapide. Les aérogels sont produit au moyen d'un échange de solvant rapide à l'intérieur des gels en injectant du $CO_2$ sous conditions supercritique, plutôt que du liquide, dans un extracteur qui a été préchauffé et pré-pressurisé. Des ondes de pression à hautes fréquences sont appliquées pour améliorer l'échange de solvant. Le procédé permet de réduire significativement le temps pour former des aérogels.

En outre, la demande de brevet américain US 2012/0112388 décrit un procédé et un appareil pour la préparation d'un aérogel hydrophobe, visant à réduire le temps dévolu à l'étape d'hydrophobisation du gel, notamment à l'aide d'ondes ultrasonores. Le procédé consiste à insérer directement un panier à structure maillée dans un réacteur, injecter le gel humide dans le panier, installer un générateur d'ultrasons dans une partie inférieure du réacteur afin d'émettre des ondes ultrasonores à l'intérieur du réacteur, et alimenter en azote, depuis la partie inférieure, l'intérieur du réacteur afin de favoriser une réaction et ainsi transformer le gel humide en un aérogel hydrophobe en peu de temps. Le temps de réaction (vieillissement) décrit dans les exemples 1 et 2 (page 3 paragraphe 50 et page 4 paragraphe 53) est toutefois de 6h.

Par ailleurs, les brevets américains US 5 811 031 et US 5 705 535 portent sur un procédé de préparation d'aérogels par séchage subcritique des hydrogels et des lyogels inorganiques et organiques préparés à partir de composés de silicium. Le séchage est un séchage diélectrique tel qu'un séchage aux microondes ou un séchage à hautes fréquences. La production de l'aérogel « humide » est, elle, effectuée selon un procédé sol-gel classique, les étapes de formation du gel et vieillissement étant conduite à 85°C pendant 7 jours.

Une autre méthode de préparation d'aérogel est décrite dans l'article de Wenzhi Zheng et al. (Advanced Materials Research, 2010, 148-149, p 1152-1162). Zheng divulgue une méthode de préparation d'un aérogel de silice hydrophobe par irradiation microonde.

La préparation de l'aérogel se fait à partir de tetraethoxysilane au moyen d'un procédé sol-gel et par catalyse acido-basique. Après une étape d'hydrophobisation de la surface de l'alcogel de silice résultant pendant 24h à l'aide de triméthyl chlorosilane, le cyclohexane est séché à pressione t température ambiante pendant 24h pour conduire à l'aérogel de silice. La durée totale de préparation de l'aérogel est donc supérieure à 2 jours.

En outre, dans la demande de brevet américain US 2007/0119344, un aérogel $TiO_2$-$SiO_2$ est préparé par mélange d'un sol $SiO_2$ comprenant un surfactant et d'un sol de $TiO_2$. Dans ce procédé, l'étape de gélification dure plusieurs heures, voir plusieurs jours suivant la quantité de titane contenue dans le sol. L'alcogel obtenu suite à l'étape de gélification est ensuite séché dans un autoclave sous atmosphère d'azote et chauffé à 270-290°C pendant 3 à 5h à une pression comprise entre 1400 et 1700 psi pour conduire à l'aérogel.

Enfin, le modèle d'utilité chinois CN 201793378 décrit un procédé de préparation d'aérogel impliquant un irradiation microonde comprenant ainsi les étapes suivantes :

1) préparation du sol de dioxyde de silicium ;
2) préparation du gel humide ; et
3) vieillissement de la solution mère et séchage à pression normale.

La préparation du sol de dioxyde de silicium comprend le mélange d'un organosilane, du solvant organique, de l'eau et d'un catalyseur acide. Le mélange est ensuite irradié aux microondes afin de réaliser la réaction de polymérisation. L'utilisation d'irradiation par microondes est ainsi limitée à l'étape de formation du sol, l'utilisation de ces microondes visant uniquement à obtenir en grand nombre des bulles microscopiques menant à un gel poreux et résistant.

Ainsi, l'art antérieur ne fournit pas de solution pour diminuer le temps dévolu à l'étape de vieillissement du lyogel, étape pourtant déterminante dans la durée globale du cycle de production des aérogels.

De manière surprenante, le demandeur a découvert qu'un chauffage diélectrique, par irradiation électro-magnétique microonde ou haute fréquence, permet de réduire considérablement la durée nécessaire à l'étape de vieillissement du gel, tout en conservant des propriétés mécaniques et isolantes satisfaisantes pour la production d'aérogels, aussi bien sous forme de granules que de matériaux composites, par exemple de type monolithique.

Un objet de la présente invention concerne donc un procédé de fabrication d'aérogels selon la revendication 1.

DEFINITIONS

Par « chauffage diélectrique », on entend au sens de la présente invention un chauffage par l'application d'ondes électromagnétiques. La présente invention concerne deux gammes de fréquence :

- les rayonnements hautes fréquences (HF) dont les fréquences usuelles se situent entre 1 et 400 MHz, correspondant à des longueurs d'onde allant de 300 à 0,75 m ; et
- les rayonnements microondes (MO) dont les fréquences varient entre 400 et 18 000 MHz, correspondant à des longueurs d'onde allant de 75 cm à 1,6 cm.

On parlera donc, dans la présente invention, de chauffage par irradiation microonde ou haute fréquence, selon la gamme de fréquences sélectionnée.

Les chauffages par HF et MO sont fondés sur le même principe. L'énergie électromagnétique est dissipée dans la masse du produit, en fonction de la distribution du champ électrique et des moments diélectriques des réactifs (solvant, sol et/ou lyogel) dans le réacteur. Ce type de transfert d'énergie est très efficace, car on sait produire des distributions de champ électrique très intenses, générant des densités de puissance volumique élevées (par exemple jusqu'à 5 kW/L de produit).

Au sens de la présente invention, on entend par « température de consigne » d'une étape de procédé la température cible de cette étape dans le milieu réactionnel, c'est-à-dire dans le lyogel dans les étapes b) et c) du procédé selon l'invention, ou dans le sol dans l'étape a). Ainsi, si la température initiale du milieu réactionnel est différente de la température de consigne, il peut exister un laps de temps pendant lequel la température du système est modifiée (par exemple par chauffage) de manière à atteindre la température de consigne. La température de consigne peut être soit constante, soit modulée, au cours de ladite étape du procédé.

Par « sol », on entend au sens de la présente invention un mélange de précurseurs, d'un solvant et éventuellement un catalyseur de gélification, menant, après la réaction de gélification et de vieillissement, au lyogel.

L'ensemble des termes hydrogels, alcogels et organogels sont rassemblés, dans la présente invention, sous la dénomination plus générale de lyogels.

Au sens de la présente invention, on englobera sous le terme « aérogel » à la fois les aérogels et les xérogels, à fins de simplification.

La réaction qui entraîne la gélification ne s'arrête pas au point de gel ; elle se poursuit. En effet, les réactions d'hydrolyse et de condensation se poursuivent lors du vieillissement, ce qui augmente la connectivité de la structure du gel. L'ensemble de ce processus d'évolution du gel au cours du temps est appelé « vieillissement ». Le vieillissement du gel se traduit par des modifications physico-chimiques qui ont lieu après la gélification, pouvant se distinguer comme suit:

- la polymérisation (étape de renforcement du réseau grâce à la formation de nouvelles liaisons, ou réticulation, notamment par condensation, par exemple due au mouvement brownien et à la flexibilité du réseau) ;
- le mûrissement (processus de dissolution et de reprécipitation), qui est essentiellement observé dans le cas d'un lyogel inorganique ; et
- la transformation de phase ou synérèse, due au rétrécissement du matériau avec expulsion du solvant.

Ainsi, par « synérèse », on entend au sens de la présente invention le retrait du lyogel résultant des réactions de réticulation ou condensation qui engendrent l'expulsion du solvant (liquide interstitiel) hors du lyogel. La synérèse engendre donc une densification du réseau solide du gel. Ainsi, la distribution de tailles de pores, la surface spécifique ainsi que la perméabilité du gel sont modifiées. Par ailleurs, les propriétés mécaniques et thermiques du gel sont améliorées.

Au sens de la présente invention, l'étape de « gélification complète » comprend à la fois l'étape de gélification au sens strict, c'est-à-dire de transition sol-gel menant au gel, et l'étape de vieillissement. En effet, étant donné les temps de réaction très courts du procédé selon la présente invention, il est difficile de distinguer les deux étapes.

Au sens de la présente invention, on entend par « pression absolue » la pression mesurée par rapport au vide (zéro absolu de pression).

Par « aérogel composite », on entend au sens de la présente invention un aérogel comprenant au moins deux composés non miscibles intimement liés entre eux. L'aérogel composite possède alors des propriétés, notamment physiques (par exemple conductivité thermique, rigidité etc...) que chacun des matériaux pris séparément ne possède pas nécessairement.

Les aérogels composites selon la présente invention comprennent un « matériau de renforcement », qui est soit fibreux soit une mousse.

Au sens de la présente invention, un « matériau de renforcement fibreux » comprend des fibres ou une nappe fibreuse non tissée, ou un mélange de celles-ci. L'homme du métier saura choisir parmi les divers types de fibres celles qui sont le plus adaptées à la fabrication d'isolants thermiques, par exemples les fibres de verre, les fibres minérales, les fibres de polyester, les fibres d'aramide, les fibres de nylon et les fibres végétales, ou un mélange de celles-ci. Pour le choix de ces fibres, l'homme du métier pourra se reporter au brevet US 6,887,563. Par « nappe fibreuse non tissée » on entend au sens de la présente invention une nappe tridimensionnelle constituée d'un enchevêtrement de fibres structuré mais non tissé. En effet, lorsque les fibres sont tissées, la conductivité thermique de la nappe fibreuse augmente et les performances des aérogels composites obtenus sont moindres.

Par « mousse », on entend au sens de la présente invention une substance, notamment un polymère, emprisonnant des bulles de gaz en son sein. Les mousses se distinguent en « mousses à cellules fermées », c'est-à-dire que les poches de gaz sont totalement enrobées de matériau solide, par opposition aux « mousses à cellules ouvertes », dans lesquelles les poches de gaz communiquent entre elles. Par exemple, on citera les mousses à cellules ouvertes de mélamine telles que les mousses comprenant un polymère dont un des monomères est la mélamine, et notamment les mousses mélamine-formaldéhyde, issues d'une réaction de polymérisation entre la mélamine et le formaldéhyde. Par exemple, les mousses commercialisées sous le nom de BASOTECT® sont des mousses de mélamine à cellules ouvertes. On peut également citer les mousses de polyuréthane à cellules ouvertes, qui sont notamment utilisées pour l'isolation acoustique.

Par « monolithique », on entend au sens de la présente invention que l'aérogel, notamment composite, est solide et se présente sous forme d'un bloc d'un seul tenant, notamment sous forme d'un panneau. Un aérogel monolithique peut être aussi bien rigide que flexible. Par « rigide » on entend que le matériau ne peut être déformé de manière significative sans observer la formation de fissures, voire la rupture du matériau monolithique. Notamment, cela signifie que le matériau monolithique ne peut être roulé. Par « flexible », on entend au contraire que le matériau peut être déformé, et notamment enroulé. On pourra employer également, pour qualifier le matériau monolithique, le terme « autoportant », qui sera entendu comme signifiant que la stabilité du produit n'est pas due à un support extérieur. Un matériau monolithique autoportant peut être aussi bien flexible que rigide.

Par opposition, un aérogel qui n'est pas monolithique sera obtenu sous forme de granules.

Dans la présente invention, la conductivité thermique de l'aérogel est mesurée selon la méthode de la plaque chaude gardée de la norme NF EN 12667 à 20°C et à pression atmosphérique en date de juillet 2001.

DESRIPTION DE LA FIGURE

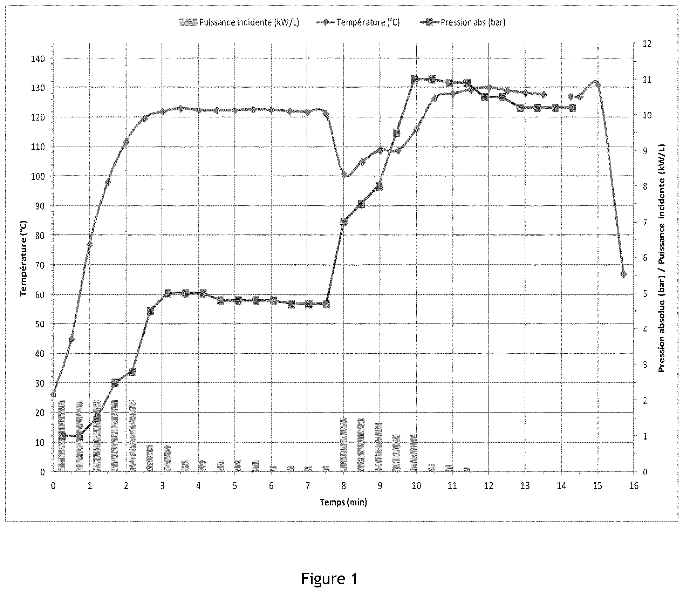

Fig. 1 : représentation de l'évolution de la température, de la pression absolue et de la densité de puissance appliquée par irradiation microonde en fonction du temps dans les conditions réactionnelles de l'exemple 2.

L'axe des abscisses représente le temps en minutes, l'axe des ordonnées (gauche) représente la température en °C, et l'autre axe des ordonnées (droite) représente à la fois la pression absolue (en bar) et la densité de puissance incidente (en kW/L).

Les carrés représentent la pression et les losanges la température. La densité de puissance est représentée sous forme d'un histogramme.

DESCRIPTION DETAILLE DE L'INVENTION

La présente invention concerne un procédé de fabrication d'aérogels selon la revendication 1.

Le procédé selon l'invention permet ainsi de diminuer très notablement le temps dévolu à l'étape de vieillissement, au point qu'il devient difficile de distinguer cette étape de l'étape de gélification à proprement parler.

En outre, le procédé selon la présente invention est reproductible et fiable, les produits obtenus sont de qualité constante, et similaire à celle des produits obtenus selon un procédé de fabrication traditionnel impliquant des temps de réaction plus longs. Avantageusement, aucun liant n'est utilisé ou ajouté à aucune étape du procédé selon l'invention.

Etape a)

Le sol comprend des précurseurs et un solvant. Ce solvant peut être organique ou aqueux. Dans un mode de réalisation préféré, le solvant est un alcool, de préférence l'éthanol. Dans un autre mode de réalisation le solvant est l'eau.

Le sol utilisé à l'étape a) est inorganique.

Lorsque le sol est organique, mais pas selon l'invention, il comprend avantageusement des précurseurs de résorcinol formaldéhyde, de phénol formaldéhyde, de mélamine formaldéhyde, crésol formaldéhyde, de phénol furfural alcool, de polyacrylamides, de polyacrylonitriles, de polycyanurates, de polyfurfural alcool, de polyimides, de polystyrènes, de polyuréthanes, de polyvinyle alcool dialdéhyde, d'époxy, d'agar agar, et d'agarose. Le sol de l'étape a) est un sol inorganique. De préférence, le sol inorganique est choisi parmi les sols de silice, d'oxyde de titane, d'oxyde de manganèse, d'oxyde de calcium, de carbonate de calcium, d'oxyde de zirconium, et leurs mélanges, plus préférentiellement parmi le groupe des sols de silice, d'oxyde de titane, d'oxyde de manganèse, d'oxyde de calcium, de carbonate de calcium et leurs mélanges, encore plus préférentiellement il s'agit un sol de silice.

Par exemple, un sol de silice peut comprendre un polyalcoxydisiloxane (notamment un polyethoxydisiloxane) comme précurseur et de l'éthanol comme solvant, en mélange avec de l'acide chlorhydrique aqueux.

Dans un mode de réalisation particulier, l'étape a) comprend la formation du sol dans le réacteur.

Dans un deuxième mode de réalisation, le sol est préalablement formé à l'extérieur du réacteur dans lequel est conduite l'étape b), et l'étape a) comprend ou consiste en le coulage du sol dans le réacteur, optionnellement en présence d'un matériau de renforcement et/ou un additif.

Avantageusement, l'additif vise à améliorer la structure de coût matière, et plus spécifiquement les propriétés mécaniques, de cohésion ou de conductivité thermique des aérogels selon l'invention. De préférence, cet additif comprend un opacifiant. Ainsi, avantageusement, le matériau selon l'invention comprend en outre un opacifiant. L'utilisation d'un opacifiant permet en effet de diminuer la valeur de la conductivité thermique en diminuant sa composante radiative. Typiquement, l'opacifiant est choisi parmi SiC, $TiO_2$, noir de carbone, graphite, $ZrO_2$, ZnO, $SnO_2$, MnO, NiO, TiC, WC, $ZrSiO_4$, $Fe_2O_3$, $Fe_3O_4$, $FeTiO_3$ ou leurs mélanges. En particulier, l'opacifiant est choisi dans le groupe constitué de SiC et $TiO_2$ et leurs mélanges.

Dans un mode de réalisation particulier de l'invention, un matériau de renforcement fibreux est placé dans le réacteur où est coulé le sol lors de l'étape a).

Le matériau de renforcement fibreux permet de structurer l'aérogel pour améliorer ses propriétés de résistance mécanique et de tenue tout en conservant ses propriétés d'isolation thermique.

De préférence, le matériau de renforcement fibreux comprend une nappe fibreuse non tissée, avantageusement choisie parmi les nappes organiques, les nappes inorganiques, les nappes de fibres naturelles, les nappes mixtes et les nappes laminées mixtes. Dans ce mode de réalisation, l'aérogel obtenu selon le procédé de l'invention est un aérogel composite monolithique. Selon un premier mode de réalisation, la nappe est organique et choisie parmi les nappes organiques en polyéthylène téréphtalate (PET). Selon un deuxième mode de réalisation, la nappe est inorganique et choisie parmi les nappes inorganiques de laine de verre ou les nappes de laine de roche.

Dans un autre mode de réalisation, un matériau de renforcement de type mousse est placé dans le réacteur où est coulé le sol lors de l'étape a). Dans ce cas également, l'aérogel obtenu selon le procédé de l'invention est un aérogel composite monolithique. De préférence, il s'agit d'une mousse à cellules ouvertes, typiquement une mousse de mélamine ou de polyuréthane à cellules ouvertes. Par exemple, les mousses commercialisées sous le nom de BASOTECT® sont des mousses de mélamine à cellules ouvertes.

Etape b)

Le chauffage diélectrique de l'étape b) peut être appliqué soit par irradiation microonde, soit par irradiation haute fréquence. Avantageusement, avantageusement la fréquence du champ électromagnétique appliqué est comprise entre 3 MHz et 3000 MHz, encore plus avantageusement entre 3 et 2500 MHz.

Dans le cas d'une irradiation microonde, la gamme de fréquences du champ électromagnétique appliqué est avantageusement comprise entre 400 et 2500 MHz. Dans le cas d'une irradiation haute fréquence, la gamme de fréquences du champ électromagnétique appliqué est avantageusement comprise entre 10 et 400 MHz.

De préférence, la gamme de température de consigne de gélification complète est comprise entre 100°C et 180°C, de manière encore préférée entre 100°C et 150°C, de manière préférée entre toutes entre 110°C et 130°C. Par exemple, la température de consigne de gélification complète de l'étape b) est comprise dans une gamme allant de 120°C à 130°C.

Dans un mode de réalisation particulier, la température de consigne de gélification complète est constante pendant l'étape b). Dans un autre mode de réalisation, la température de consigne de gélification complète est modulée pendant l'étape b).

De préférence, la température de consigne de gélification complète est supérieure au point d'ébullition du solvant. Avantageusement, la pression absolue dans le réacteur à l'étape b) est supérieure à la pression atmosphérique. De préférence, l'étape b) est donc réalisée sous pression entre 150 kPa et 1200 kPa (entre 1,5 et 12 bar).

La durée $t_1$ suffisante pour atteindre l'achèvement de la synérèse du lyogel est déterminée selon des critères bien connus de l'homme du métier. Par exemple, on peut mesurer cette durée en quantifiant le solvant expulsé du gel lors de cette étape : la synérèse est terminée lorsqu'on n'observe plus d'expulsion de solvant. En pratique, on poursuit le procédé (i.e. on procède à l'étape d) optionnellement précédée de l'étape c)) jusqu'à obtention de l'aérogel final, et on mesure les propriétés thermiques de l'aérogel obtenu. Si celles-ci sont satisfaisantes, c'est-à-dire que la conductivité thermique λ de l'aérogel final est notamment inférieure à 25 mW/m.K, de préférence inférieure à 21 mW/m.K, et dans le cas des aérogels composites monolithiques comprise entre 10 et 15 mW/m.K, la durée $t_1$ est suffisante. Si elles ne le sont pas (par exemple conductivité thermique λ de l'aérogel final supérieure à 25 mW/m.K, de préférence supérieure à 21 mW/m.K, et dans le cas des aérogels composites monolithiques supérieure à 15 mW/m.K), la durée $t_1$ est insuffisante.

En outre, on peut également mesurer masse volumique apparente de l'aérogel obtenu. Si celle-ci est satisfaisante (par exemple masse volumique apparente inférieure ou égale à 150 kg. $m^{-3}$, notamment comprise entre 40 et 150 kg. $m^{-3}$; dans le cas d'aérogels obtenus sous forme d'aérogels monolithiques, l'aérogel possède de préférence une masse volumique apparente comprise entre 70 et 150 kg. $m^{-3}$; dans le cas d'aérogels obtenus sous forme de granules, l'aérogel possède de préférence une masse volumique apparente comprise entre 40 et 90 kg. $m^{-3}$), la durée $t_1$ est suffisante. Si elles ne le sont pas (par exemple masse volumique apparente supérieure ou égale à 150 kg. $m^{-3}$ dans le cas d'un aérogel monolithique ; ou supérieure ou égale à 90 kg. $m^{-3}$ dans le cas d'un aérogel granulaire), la durée $t_1$ est insuffisante.

On peut également mesurer les propriétés mécaniques de l'aérogel obtenu. Si celles-ci sont satisfaisantes (par exemple le module d'Young de l'aérogel est compris entre 0.6 et 2 MPa), la durée $t_1$ est suffisante. Si elles ne le sont pas (par exemple module d'Young inférieur à 0.6 MPa), la durée $t_1$ est insuffisante.

De préférence, la durée $t_1$ est d'au moins 6 minutes. On constate expérimentalement que cette durée $t_1$ est avantageusement inférieure ou égale à 1 heure, encore plus avantageusement inférieure ou égale à 30 minutes, encore plus avantageusement inférieure ou égale à 15 minutes, encore plus avantageusement inférieure ou égale à 10 minutes.

Le temps de chauffage pour atteindre la température $T_b$ dépend de la quantité de sol dans le réacteur et de la puissance fournie par le générateur. Ainsi, ce temps de chauffage est directement lié à la densité de puissance appliquée au matériau (sol ou lyogel). De préférence, ce temps est le plus court possible, et si possible inférieur à la durée suffisante pour obtenir la gélification complète du sol en lyogel à l'étape b). Par exemple, ce temps de chauffage peut être d'environ 1 ou 2 minutes.

Dans un mode de réalisation, la température $T_b$ est maintenue dans la gamme de température ci-dessus grâce à l'isolation thermique du réacteur ou par chauffage rayonnant ou conductif.

Dans un deuxième mode de réalisation, la $T_b$ est maintenue dans la gamme de température ci-dessus par chauffage diélectrique, de préférence haute fréquence ou microondes.

Dans ce deuxième mode de réalisation, avantageusement, la durée totale $t_{g1}$ du chauffage diélectrique à l'étape b) est d'au moins 7 minutes. La durée totale de chauffage commence au début de la période de montée en température et se termine à la fin de la durée de maintien de la température de consigne de gélification complète. En d'autres termes, elle comprend la durée de montée en température et la durée $t_1$. On constate expérimentalement que cette durée $t_{g1}$ est avantageusement inférieure ou égale à 1 heure, encore plus avantageusement inférieure ou égale à 30 minutes, encore plus avantageusement inférieure ou égale à 15 minutes, encore plus avantageusement inférieure ou égale à 12 minutes.

Etape c)

Lorsque le séchage de l'étape d) est effectué dans des conditions subcritiques, l'étape c) d'hydrophobisation n'est pas optionnelle.

Avantageusement, lorsque l'aérogel est organique, l'étape c) n'est pas mise en oeuvre. L'étape c) est mise en oeuvre à une température de consigne d'hydrophobisation $T_c$ comprise dans une gamme allant de 60°C à 200°C, la température $T_c$ étant maintenue dans cette gamme pendant une durée suffisante $t_2$ pour obtenir l'hydrophobisation du lyogel.

La durée $t_2$ suffisante pour obtenir l'hydrophobisation du lyogel à l'étape c) est déterminée selon des critères bien connus de l'homme du métier. Par exemple, on peut mesurer cette durée en déterminant le taux d'élément carbone par analyse élémentaire. En fonction de la nature de l'agent hydrophobant, on peut déduire la structure des groupements hydrophobes greffés sur le lyogel. En effectuant une différence entre la teneur en élément carbone du lyogel hydrophobé avec le lyogel obtenu directement à l'issue de l'étape b) (non hydrophobé), il est possible de déduire la concentration de groupements greffés. Par exemple, dans le cas d'un alcogel de silice subissant un traitement hydrophobant avec l'hexaméthyldisiloxane, la concentration maximale de greffage des $Si-(CH_3)_3$ est de 60% par rapport au nombre de silanols $Si-OH$. En pratique, on poursuit le procédé (i.e. on procède à étape d)) jusqu'à obtention de l'aérogel final, et on mesure les propriétés thermiques de l'aérogel obtenu. Si celles-ci sont satisfaisantes (par exemple, la conductivité thermique de l'aérogel est inférieure à 25 mW/m.K, préférentiellement inférieure à 21 mW/m.K, ou dans le cas d'un aérogel composite monolithique comprise entre 10 et 15 mW/m.K), la durée $t_2$ est suffisante. Si elles ne le sont pas (par exemple conductivité thermique supérieure à 25 mW/m.K, de préférence supérieure à 21 mW/m.K, ou dans le cas d'un aérogel composite monolithique supérieure à 15 mW/m.K), la durée $t_2$ est insuffisante.

En outre, on peut également mesurer la masse volumique apparente de l'aérogel obtenu. Si celle-ci est satisfaisante (par exemple masse volumique apparente inférieure ou égale à 150 kg. m$^{-3}$, notamment comprise entre 40 et 150 kg. m$^{-3}$; dans le cas d'aérogels obtenus sous forme d'aérogels monolithiques, l'aérogel possède de préférence une masse volumique apparente comprise entre 70 et 150 kg. m$^{-3}$; dans le cas d'aérogels obtenus sous forme de granules, l'aérogel possède de préférence une masse volumique apparente comprise entre 40 et 90 kg. m$^{-3}$), la durée $t_2$ est suffisante. Si elles ne le sont pas (par exemple masse volumique apparente supérieure ou égale à 150 kg. m$^{-3}$ dans le cas d'un aérogel monolithique ; ou supérieure ou égale à 90 kg. m$^{-3}$ dans le cas d'un aérogel granulaire), la durée $t_2$ est insuffisante.

On peut également mesurer les propriétés mécaniques de l'aérogel obtenu. Si celles-ci sont satisfaisantes (par exemple le module d'Young de l'aérogel est compris entre 0.6 et 2 MPa), la durée $t_2$ est suffisante. Si elles ne le sont pas (par exemple module d'Young inférieur à 0.6 MPa), la durée $t_2$ est insuffisante.

Dans un mode de réalisation particulier, la température $T_c$ est identique à la température de $T_b$.

De préférence, la température $T_c$ est supérieure au point d'ébullition du solvant. Avantageusement, la pression absolue dans le réacteur à l'étape c) est supérieure à la pression atmosphérique. De préférence, l'étape c) est donc réalisée sous pression. Par exemple, la pression absolue dans le milieu réactionnel à l'étape c) est comprise entre 100 kPa et 2000 kPa (entre 1 et 20 bar) de manière encore préférée elle est comprise entre 100 kPa et 1500 kPa (entre 1 et 15 bar) de manière préférée entre toutes elle est comprise entre 150 kPa et 1200 kPa (entre 1,5 et 12 bar).

Avantageusement, les réactifs d'hydrophobisation (en particulier l'agent hydrophobant) sont introduits à une pression comprise entre la pression atmosphérique et une pression représentant 150% de la pression à l'intérieur du réacteur dans lequel est mise en oeuvre l'étape c). De préférence, les réactifs d'hydrophobisation sont introduits à une pression comprise entre 120% et 150% de la pression à l'intérieur du réacteur dans lequel est mise en oeuvre l'étape c).

Dans un mode de réalisation avantageux, les étapes b) et c) sont mises en oeuvre dans le même réacteur.

Dans un autre mode de réalisation avantageux, les étapes a), b) et c) sont mises en oeuvre dans le même réacteur.

Avantageusement, les réactifs d'hydrophobisation (en particulier l'agent hydrophobant) sont introduits à une température comprise entre 20°C et leur température d'ébullition. Par exemple, lorsque l'agent hydrophobant est l'HDMSO, les réactifs d'hydrophobisation (en particulier l'agent hydrophobant) sont introduits à une température comprise entre 20°C et 150°C. Dans un mode de réalisation particulier, les réactifs d'hydrophobisation sont introduits à température ambiante.

Dans un cas particulier, l'étape c) d'hydrophobisation peut impliquer une phase de chauffage ou de refroidissement pour atteindre une température de consigne d'hydrophobisation dans une gamme allant de 60°C à 200°C.

Cependant, de manière générale, lors de l'introduction des réactifs d'hydrophobisation, notamment lorsque ceux-ci sont introduits à température ambiante, on constate une légère chute de la température du lyogel. Dans ce cas, il est préférable d'effectuer un chauffage pour atteindre la température de $T_c$. Ainsi, dans ce mode de réalisation, l'étape c) d'hydrophobisation implique un chauffage pour atteindre une température de consigne d'hydrophobisation $T_c$ dans une gamme allant de 60°C à 200°C, la température $T_c$ étant maintenue dans cette gamme pendant une durée suffisante $t_2$ pour obtenir l'hydrophobisation du lyogel.

Le temps de chauffage pour atteindre la température $T_c$ dépend de la quantité de lyogel dans le réacteur, de sa température initiale (i.e. de la température $T_b$), de la température et de la quantité de réactifs d'hydrophobisation introduits, et de la densité de puissance appliquée au mélange réactionnel comprenant le lyogel et les réactifs d'hydrophobisation. De préférence, ce temps est le plus court possible, et si possible inférieur à la durée suffisante pour obtenir l'hydrophobisation du sol à l'étape c). Par exemple, ce temps de chauffage peut être d'environ 1 minute.

Dans le cas où la température $T_b$ est égale à la température $T_c$, la durée du chauffage est telle, qu'elle est suffisante pour compenser le refroidissement dû à l'introduction des réactifs d'hydrophobisation. Par exemple, ce temps de chauffage peut être d'environ 1 minute.

Dans un premier mode de réalisation, le chauffage de l'étape c) est mis en oeuvre par chauffage rayonnant ou conductif. Dans ce cas, la gamme de température préférée est comprise entre 70°C et 150°C, de manière encore préférée entre 70°C et 120°C, de manière préférée entre toutes entre 70°C et 110°C.

De préférence, dans ce premier mode de réalisation, la durée $t_2$ est d'au moins 1 heures. On constate expérimentalement que cette durée $t_2$ est avantageusement inférieure ou égale à 6 heures, avantageusement inférieure ou égale à 4 heures, encore plus avantageusement inférieure ou égale à 2 heures. La durée $t_2$ est choisie en particulier en fonction de la température à laquelle est effectuée l'étape c).

Dans un deuxième mode de réalisation, le chauffage de l'étape c) est mis en oeuvre par chauffage diélectrique. Le chauffage diélectrique de l'étape c) peut être appliqué soit par irradiation microonde, soit par irradiation haute fréquence. Avantageusement, la gamme de fréquences du champ électromagnétique appliqué est comprise entre 3 MHz et 3000 MHz, encore plus avantageusement entre 3MHz et 2500 MHz. Dans le cas d'une irradiation microonde, la gamme de fréquences du champ électromagnétique appliqué est avantageusement comprise entre 400 et 2500 MHz. Dans le cas d'une irradiation haute fréquence, la gamme de fréquences du champ électromagnétique appliqué est avantageusement comprise entre 10 et 400 MHz.

De préférence, dans ce deuxième mode de réalisation, la durée $t_2$ est d'au moins 6 minutes. On constate expérimentalement que cette durée $t_2$ est avantageusement inférieure ou égale à 1 heure, avantageusement inférieure ou égale à 30 minutes, encore plus avantageusement inférieure ou égale à 15 minutes, encore plus avantageusement inférieure ou égale à 10 minutes.

Dans ce deuxième mode de réalisation mode de réalisation, la température de consigne d'hydrophobisation de l'étape c) est avantageusement maintenue dans la gamme de température ci-dessus par chauffage diélectrique, de préférence haute fréquence ou microondes. Avantageusement, la durée totale $t_{g2}$ du chauffage diélectrique à l'étape c) est alors d'au moins 7 minutes. La durée totale $t_{g2}$ comprend la durée $t_{g2}$ et éventuellement la durée de montée en température. On constate expérimentalement que cette durée $t_{g2}$ est avantageusement inférieure ou égale à 1 heure, avantageusement inférieure ou égale à 30 minutes, encore plus avantageusement inférieure ou égale à 15 minutes, encore plus avantageusement inférieure ou égale à 12 minutes.

Dans le cas où le lyogel est un alcogel, l'étape b) est avantageusement suivie d'une étape c) de traitement d'hydrophobisation de l'alcogel, à l'issue duquel est obtenu un alcogel hydrophobé. L'étape c) comprend par exemple la mise en contact de l'alcogel obtenu à l'étape b) avec un agent hydrophobant en milieu acide de pH compris entre 1 et 3. Avantageusement, l'agent hydrophobant utilisé est choisi parmi le groupe constitué des organosiloxanes, des organochlorosilanes et des organoalkoxysilanes, de manière plus avantageuse, l'agent hydrophobant utilisé est choisi parmi le groupe constitué de l'hexaméthyldisiloxane (HMDSO), le triméthylchlorosilane, le triméthyléthoxysilane et l'hexaméthyldisilazane, de manière encore plus avantageuse l'hexaméthyldisiloxane (HMDSO). En outre, dans ce mode de réalisation, le sol est avantageusement un sol de silice, de préférence obtenu par hydrolyse contrôlée de tétraéthoxysilane dans l'éthanol. Avantageusement, l'alcogel est acidifié lors de l'étape c) par addition d'un acide minéral ou organique. De manière plus avantageuse, l'acide minéral est l'acide chlorhydrique et l'acide organique est l'acide trifluoroacétique. De manière encore plus avantageuse, l'acide est l'acide trifluoroacétique ou l'acide chlorhydrique et l'agent hydrophobant l'hexaméthyldisiloxane (HMDSO).

Dans le cas où l'agent hydrophobant est l'hexaméthyldisilazane, celui-ci est avantageusement ajouté seul ou avec un solvant comme l'éthanol.

Avantageusement, dans ce mode de réalisation, l'étape c) est conduite à une température comprise entre 50°C et 150°C. Encore plus avantageusement, l'étape c) est conduite à une température supérieure ou égale à la température d'ébullition de l'alcool (solvant de l'alcogel). Dans le cas où le solvant est l'éthanol, l'étape c) est conduite à une température avantageusement comprise entre 100°c et 150°C, de préférence entre 110°C et 130°C.

Dans le cas où le lyogel est un hydrogel, une étape b1) d'échange du solvant (l'eau) par un solvant organique tel l'acétone, l'hexane ou l'heptane menant à la formation d'un lyogel est avantageusement réalisée entre les étapes b) et c). Les conditions de mise en oeuvre de l'étape c) de traitement d'hydrophobisation du lyogel sont similaires à celles décrites précédemment dans le cas où le lyogel est un alcogel (notamment température, réactifs, etc) au solvant près.

Dans ces deux modes de réalisation, le traitement hydrophobant à l'étape c) du procédé a notamment pour but de diminuer la reprise hydrique du matériau composite.

Séchage : <u>étape d)</u>

Le séchage à l'étape d) est de préférence réalisé de manière que l'aérogel obtenu présente une quantité résiduelle de solvant en poids inférieure ou égale à 3% (en poids), de préférence 1% (en poids), selon la norme EN/ISO 3251. Le protocole utilisé consiste à prélever 1 g d'aérogel selon l'invention, le peser, puis de le sécher pendant 3h dans une étuve à 105°C, puis de peser l'aérogel ainsi séché. Le rapport de la différence entre ces deux poids sur le poids de l'aérogel obtenu après séchage permet de déterminer la quantité résiduelle de solvant en % en poids.

Dans un mode de réalisation particulier, l'étape d) de séchage est mise en oeuvre dans des conditions supercritiques.

Dans un autre mode de réalisation particulier, l'étape d) de séchage est mise en oeuvre dans des conditions subcritiques, par exemple par séchage rayonnant, conductif, convectif ou diélectrique.

Lorsque l'étape d) est un séchage de type convectif, il est réalisé de préférence à une température comprise entre 120°C et 180°C, de manière préférée comprise entre 140°C et 160°C, encore plus préférentiellement égale à 150°C. Le séchage convectif peut être conduit en mode naturel, mais est de préférence conduit en mode forcé.

Lorsque l'étape d) est une étape de séchage diélectrique, il est avantageusement par microondes ou hautes fréquences. De préférence, la densité de puissance fournie lors de l'étape d) de séchage par microondes comprise entre 0.3 kW et 3 kW par kg de lyogel éventuellement hydrophobé de départ, de préférence comprise entre 0.5 kW et 2 kW par kg de lyogel de départ, encore préférentiellement égale à 1 kW par kg de lyogel de départ. Ladite densité de puissance est ajustée au cours du séchage de manière que la température du matériau soit comprise entre 40°C et 400°C, plus préférentiellement entre 40°C et 200°C, encore plus préférentiellement entre 50°C et 150°C.

Dans un mode de réalisation préféré de l'invention, lorsque l'étape d) est une étape de séchage diélectrique, elle est réalisée dans le même réacteur que le réacteur de mise en oeuvre des étapes b) et c), après avoir adapté un système pour distiller le solvant qui est évaporé pendant le séchage.

Dans un mode de réalisation particulier, l'étape d) est précédée d'une étape d1) de préséchage dans des conditions subcritiques à une température inférieure à 80°C. Avantageusement, la température du pré-séchage de l'étape d1) est comprise entre 40°C et 80°C, encore plus avantageusement comprise entre 60°C et 80°C, encore plus avantageusement est égale à 80°C.

De préférence, le pré-séchage d1) est poursuivi jusqu'à l'obtention d'un lyogel condensé ayant perdu entre 10 et 80% de solvant en poids, avantageusement entre 20% et 60% de solvant en poids, encore plus avantageusement entre 40% et 50% de solvant en poids par rapport au poids du lyogel de départ. La masse de solvant perdue lors de l'étape d) ou d1) est mesurée différemment selon l'échelle du procédé. A l'échelle du laboratoire, on mesure cette quantité par la différence entre le poids du lyogel et celui de l'aérogel obtenu après l'étape b) ou c) (lorsque celle-ci est réalisée) après séchage dans les conditions de l'étape d) ou d1). A l'échelle industrielle, le solvant évaporé lors de l'étape de séchage d) ou d1) est condensé dans un autre réacteur, puis pesé.

Dans un mode de réalisation préféré de l'invention, l'étape d1) est réalisée par circulation d'un flux gazeux chaud dans le réacteur. Le flux gazeux est typiquement un flux de gaz inerte tel que l'azote, l'air, ou un gaz rare. Avantageusement, le flux gazeux chaud circule verticalement, encore plus avantageusement du haut vers le bas.

Dans un autre mode de réalisation, le pré-séchage à l'étape d1) est conduit sous pression réduite. Un tel mode de réalisation est avantageux car il permet, à température égale, d'obtenir des temps de pré-séchage plus courts.

Chauffage diélectrique

De préférence, le champ électro-magnétique appliqué pour le chauffage diélectrique (de préférence par irradiation microonde ou haute fréquence) lors de l'étape b), c) ou d), est homogène dans le lyogel.

Avantageusement, la fréquence du champ électro-magnétique appliqué à l'étape b), et éventuellement à l'étape c) et/ou d), sera choisie dans une plage allant de 3 MHz à 3 000 MHz.

La géométrie du réacteur est avantageusement choisie par l'homme du métier de manière que la densité de champ électro-magnétique appliqué pour le chauffage diélectrique (de préférence par irradiation microonde ou haute fréquence) lors de l'étape b), c) ou d), est homogène dans le sol ou le lyogel. Cette géométrie est notamment adaptée selon des critères bien connus de l'homme du métier en fonction de la profondeur de pénétration ($d_p$) du champ électromagnétique, qui est fonction de la fréquence du champ électromagnétique appliqué, comme le rappelle la formule suivante :

$$d_p = c/(2\sqrt{(2)}*\pi f\sqrt{\{\varepsilon'_r[\sqrt{(1+(\varepsilon''_r/\varepsilon'_r)^2)}-1]\}})$$

dans laquelle:

- $d_p$ représente la profondeur de pénétration (en mètres) où la puissance microonde atteint 1/3 (un tiers) de la puissance appliquée sur la surface ;
- c représente la vitesse de la lumière (en m/s$^{-1}$)
- f représente la fréquence du champ électro-magnétique appliqué (Hz)
- $\varepsilon'_r$ représente permitivité relative (sans dimension)
- $\varepsilon''_r$ représente la perte diélectrique (sans dimension).

Les valeurs de $\varepsilon'_r$ et $\varepsilon''_r$ sont connues de l'homme du métier. Notamment, $\varepsilon'_r$ vaut 34 pour l'éthanol, 78 pour l'eau. Par ailleurs, $\varepsilon''_r$ est compris entre 0.1 et 5 pour les réactifs selon l'invention, notamment les sols et alcogels de silice éventuellement hydrophobés. La densité de puissance fournie par le générateur est adaptée en fonction du volume de réactifs (sol, solvant, lyogel, réactifs d'hydrophobisation) et des de leurs caractéristiques intrinsèques, telles que notamment leur constante diélectrique. Pour pallier d'éventuelles inhomogénéités du champs électro-magnétique, un balayage avec un brasseur d'ondes ou en déplaçant la cavité réactionnelle dans le champ peut être mis en oeuvre.

Aérogels obtenus par le procédé

Les aérogels obtenus par le procédé selon l'invention se présentent sous forme de granules ou d'aérogels monolithiques.

Avantageusement, les aérogels ainsi obtenus possèdent avantageusement une conductivité thermique λ inférieure ou égale à 25 mW/m.K, encore plus avantageusement inférieure ou égale à 21 mW/m.K, mesurée selon la méthode de la plaque chaude gardée de la norme NF EN 12667 à 20°C et à pression atmosphérique. Dans le cas d'aérogels obtenus sous forme de granules, l'aérogel possède de préférence une conductivité thermique λ inférieure ou égale à 21 mW/m.K, avantageusement comprise entre 10 et 21 mW/m.K, mesurée selon la méthode de la plaque chaude gardée de la norme NF EN 12667 à 20°C et à pression atmosphérique.

Dans le cas d'aérogels obtenus sous forme d'aérogels monolithiques, l'aérogel possède de préférence une conductivité thermique λ inférieure ou égale à 20 mW/m.K, avantageusement comprise entre 10 et 15 mW/m.K, mesurée selon la méthode de la plaque chaude gardée de la norme NF EN 12667 à 20°C et à pression atmosphérique.

En outre, les aérogels obtenus par le procédé selon la présente invention possèdent avantageusement une masse volumique apparente inférieure ou égale à 150 kg. m$^{-3}$, par exemple la masse volumique apparente est comprise entre 40 et 150 kg. m$^{-3}$. Dans le cas d'aérogels obtenus sous forme d'aérogels monolithiques, l'aérogel possède de préférence une masse volumique apparente comprise entre 70 et 150 kg. m$^{-3}$, par exemple entre 100 et 150 kg. m$^{-3}$. Dans le cas d'aérogels obtenus sous forme de granules, l'aérogel possède de préférence une masse volumique apparente comprise entre 40 et 90 kg. m$^{-3}$.

Avantageusement, l'aérogel obtenu par le procédé selon l'invention ne comprend pas de liant. On peut citer comme exemple de liant inorganique les ciments, les plâtres, le gypse, la chaux, et comme exemple de liant organique des thermoplastiques tels que les cires polyoléfines, les polymères de styrène, les polyamides. Le terme liant comprend également les adhésifs, tels que les résines époxy, les cyanoacrylates par exemple.

Les aérogels obtenus selon le procédé de la présente invention sont inorganiques, organiques ou hybrides.

Dans un mode de réalisation, l'aérogel est un aérogel inorganique, notamment choisi dans le groupe des aérogels de silice, d'oxyde de titane, d'oxyde de manganèse, d'oxyde de calcium, de carbonate de calcium, d'oxyde de zirconium, de polyuréthane/cellulose ou leurs mélanges, préférentiellement dans le groupe des aérogels de silice, d'oxyde de titane, d'oxyde de manganèse, d'oxyde de calcium, de carbonate de calcium ou leurs mélanges, encore plus préférentiellement il s'agit d'un aérogel de silice, avantageusement hydrophobé.

Dans un autre mode de réalisation, l'aérogel est un aérogel organique, notamment choisi dans le groupe des aérogels de résorcinol formaldéhyde, de phénol formaldéhyde, de mélamine formaldéhyde, de crésol formaldéhyde, de phénol furfural alcool, de polyacrylamides, de polyacrylonitriles, de polyacrylates, de polycyanurates, de polyfurfural alcool, de polyimides, de polystyrènes, de polyuréthanes, de polyvinyle alcool dialdéhyde, d'époxy, d'agar agar, et d'agarose (pour une synthèse par procédé traditionnel voir notamment C. S. Ashley, C. J. Brinker and D. M. Smith, Journal of Non-Crystalline Solids, Volume 285, 2001).

Les aérogels hybrides comprennent avantageusement un mélange d'aérogels organiques et inorganiques, de préférence tels que ceux cités ci-dessus.

Les aérogels obtenus selon le procédé de l'invention présentent préférentiellement un taux de reprise hydrique selon la norme NF EN ISO 12571 à température ambiante et à 70% d'humidité relative inférieur ou égal à 5%, encore plus préférentiellement inférieur ou égal à 3%, et préférentiellement un taux de reprise hydrique à température ambiante et à 95% d'humidité relative inférieur ou égal à 10%, encore plus préférentiellement inférieur ou égal à 5%.

Avantageusement, l'aérogel obtenu par le procédé selon l'invention est hydrophobe, perméable à la vapeur et tient en température jusqu'à 250°C. Les matériaux selon l'invention présentent de bonnes propriétés de résistance au feu, ils sont de préférence classés au moins B1 selon la norme allemande DIN 4102-1, M1 en France selon la norme NF P-92507, ou V0 aux Etats-Unis selon la norme UL94. L'énergie de combustion ou pouvoir calorifique supérieur du matériau composite selon l'invention mesuré selon la norme NF EN ISO 1716 est avantageusement plus faible que la plupart des matériaux isolants de performance, tels que le polyuréthane. Ils présentent aussi de bonnes propriétés d'isolation acoustique, notamment comparables à celles de la laine de roche.

Les aérogels composites (i.e. comprenant un matériau de renforcement) obtenus selon la présente invention combinent les propriétés mécaniques des fibres et les propriétés isolantes des aérogels.

Dans un premier mode de réalisation particulier, l'aérogel composite comprend un matériau de renforcement fibreux comprenant une nappe fibreuse non tissée, avantageusement choisie parmi les nappes organiques, les nappes inorganiques, les nappes de fibres naturelles, les nappes mixtes et les nappes laminées mixtes. Avantageusement, la nappe organique est choisie parmi les nappes organiques en polyéthylène téréphtalate (PET). Avantageusement, la nappe inorganique est choisie parmi les nappes inorganiques de laine de verre ou des nappes de laine de roche. Avantageusement, la nappe de fibres naturelles est choisie parmi les nappes de fibres naturelles en laine de mouton ou en fibre de lin. Avantageusement, la nappe fibreuse non tissée possède une épaisseur comprise entre 30 et 70 mm et une porosité ouverte comprise entre 96% et 99.8%.

Les aérogels monolithiques ainsi obtenus présentent avantageusement une épaisseur comprise entre 30 mm et 70 mm, encore plus avantageusement entre 30 mm et 60 mm, encore plus avantageusement entre 40 mm et 45 mm.

Avantageusement, dans ce premier mode de réalisation, l'aérogel monolithique comprend entre 50% et 90% en poids d'aérogel par rapport au poids du panneau, de préférence entre 60% et 80% en poids d'aérogel par rapport au poids du panneau.

Dans un deuxième mode de réalisation, l'aérogel composite comprend une mousse en tant que matériau de renforcement. Une telle mousse permet d'améliorer certaines propriétés mécaniques de l'aérogel, tout en conservant une conductivité thermique inférieure à 20 mW/m.K mesurée selon la méthode de la plaque chaude gardée de la norme NF EN 12667 à 20°C et à pression atmosphérique. Par exemple, la contrainte maximale en phase élastique des matériaux composites est beaucoup plus importante que celle de l'aérogel correspondant non renforcé. Les valeurs typiques sont respectivement de 3.5 MPa (pour le matériau composite) et $1.10^{-4}$ MPa (pour l'aérogel non renforcé correspondant).

Dans ce deuxième mode de réalisation, l'aérogel monolithique obtenu par le procédé selon l'invention comprend entre 85% et 98% en poids d'aérogel par rapport au poids du matériau composite, de préférence entre 90% et 95% ou entre 90 et 98% en poids d'aérogel par rapport au poids du matériau composite.

Dans ce mode de réalisation, l'aérogel monolithique obtenu par le procédé selon l'invention présente avantageusement une épaisseur comprise entre 2 et 50 mm, de préférence entre 5 et 30 mm, par exemple entre 10 et 20 mm. On observe que l'épaisseur du matériau composite monolithique est corrélée à l'épaisseur de la mousse utilisée. Ainsi, la mousse présente avantageusement une épaisseur comprise entre 2 et 50 mm, de préférence entre 5 et 30 mm, par exemple entre 10 et 20 mm.

Utilisations

Les aérogels obtenus par le procédé selon la présente invention peuvent être utilisés en tant qu'isolant thermique, notamment pour des applications dans la construction de bâtiments ou dans l'isolation de systèmes ou procédés industriels. Ainsi, les aérogels obtenus par le procédé selon la présente invention sont avantageusement utilisés pour la fabrication de matériaux de construction, notamment des murs et cloisons, mais également des parquets ou plafonds ou pour l'isolation des tuyauteries industrielles. Les aérogels obtenus par le procédé selon la présente invention peuvent également être utilisés en tant qu'isolants acoustiques.

Les aérogels monolithiques obtenus par le procédé selon la présente invention peuvent en particulier être utilisés pour former des panneaux multicouches, plus particulièrement sous forme de panneaux multicouches laminés ou sandwichs, comprenant au moins une couche essentiellement constituée d'un matériau composite monolithique selon l'invention, éventuellement en association avec des couches de nature différente. Dans lesdits panneaux multicouches, chaque couche est constituée d'un matériau monolithique ou d'un panneau collé à une ou plusieurs autres couches.

A titre d'exemple, une ou plusieurs plaques de plâtre (éventuellement de type BA13) peuvent être collées d'un ou de chaque côté d'un matériau composite monolithique selon l'invention pour former un complexe de doublage. On envisage également des panneaux multicouches mixtes comprenant une association d'un ou plusieurs matériaux composites selon l'invention et d'un matériau composite tel que décrit par exemple dans la demande internationale WO 2013/053951.

Les panneaux multicouches ainsi obtenus trouvent également des applications en tant qu'isolant thermique, notamment pour des applications dans la construction de bâtiments ou dans l'isolation de systèmes ou procédés industriels.

Les aérogels monolithiques obtenus par le procédé selon la présente invention peuvent en particulier être utilisés comme absorbeurs de chocs mécaniques.

Les exemples qui suivent sont destinés à illustrer plus en détails la présente invention, mais ne sont en aucun cas limitatifs.

## EXEMPLES

### Exemple 1 : Préparation d'un sol de silice

Un sol de silice présentant la composition suivante : 36,2% de polyethoxydisiloxane en solution à 20% dans l'éthanol, est obtenu par hydrolyse partielle du tetraethoxysilane (TEOS) en présence d'acide chlorhydrique, 54.3% d'éthanol, 8.9% d'eau permutée, 0.6% d'ammoniaque.

### Exemple 2 : Préparation d'un aérogel selon l'invention, avec chauffage par irradiation microonde lors de l'étape c)

2 L de sol de silice de l'exemple 1 a été versé avant gélification dans une chambre fermée (étape a). Le réacteur est ensuite chauffé par l'application d'un champ de microondes jusqu'à obtenir une température d'environ 120°C (température de consigne de gélification complète) dans la masse des réactifs (étape b). La pression à l'intérieur du réacteur est alors de 5 bars absolus. La température de consigne de gélification complète est de 120°C. La durée de l'étape b) (tg1) est de 7.5 minutes.

Ensuite, de l'acide chlorhydrique (jusqu'à obtenir un pH=1) et de l'hexaméthyldisiloxane (agent hydrophobant) sont introduits à température et pression ambiantes dans le réacteur de manière à recouvrir totalement l'alcogel (étape c). On observe une faible chute de température. Le milieu réactionnel est chauffé par l'application d'un champ de microondes pour atteindre à nouveau une température d'environ 120°C (température de consigne d'hydrophobisation). La durée de l'étape c) est de 7.5 minutes (tg2). Puis, les microondes sont arrêtées, et le milieu réactionnel est séparé de l'alcogel de silice hydrophobe par percolation.

La figure 1 représente l'évolution de la température, de la pression absolue et de la densité de puissance appliquée par irradiation microonde en fonction du temps dans la masse des réactifs.

Le temps global de réaction (étapes a), b) et c)) est donc d'environ 15 minutes.

L'alcogel est ensuite séché en étuve ventilée à 160°C pendant 2 heures (étape d). L'aérogel obtenu sous forme de granules présente une masse volumique apparente de 85 kg/m$^3$ et une conductivité thermique de 24 mW/m.K, mesurée selon la méthode de la plaque chaude gardée de la norme NF EN 12667 à 20°C et pression atmosphérique.

### Exemple 3 : Préparation d'un aérogel monolithique selon l'invention, avec chauffage par irradiation microonde lors de l'étape c)

2 L sol de silice de l'exemple 1 a été versé avant gélification sur une nappe de mousse de mélamine de dimension 50x20x10 mm$^3$ dans une chambre fermée (étape a).

Le réacteur est ensuite chauffé par l'application d'un champ de microondes jusqu'à obtenir une température d'environ 120°C (température de consigne de gélification complète) dans la masse des réactifs (étape b). La pression à l'intérieur du réacteur est alors de 5 bars absolus. La température de consigne de gélification complète est de 120°C. La durée de l'étape b) est de 1 heure (tg1).

Ensuite, de l'acide chlorhydrique (jusqu'à pH=1) et de l'hexaméthyldisiloxane (agent hydrophobant) sont introduits à température et pression ambiantes dans le réacteur de manière à recouvrir totalement l'alcogel composite (étape c). On observe une faible chute de température. Le milieu réactionnel est chauffé par l'application d'un champ de microondes pour atteindre à nouveau une température d'environ 120°C (température de consigne d'hydrophobisation).

La durée de l'étape c) est de 1 heure (tg2). Puis, les microondes sont arrêtées, et le milieu réactionnel est séparé de l'alcogel de silice hydrophobe par percolation.

Le temps global de réaction (étapes a), b) et c)) est donc d'environ 2 heures.

L'alcogel est ensuite séché en étuve ventilée à 160°C pendant 2 heures (étape d). L'aérogel obtenu sous forme d'aérogel composite monolithique présente une masse volumique apparente de 120 kg/m³ et une conductivité thermique de 13.5 mW/m.K, mesurée selon la méthode de la plaque chaude gardée de la norme NF EN 12667 à 20°C et pression atmosphérique.

## Exemple 4 : Autres exemples selon l'invention

Le protocole employé pour ces tests est le suivant. 50 g de sol de silice de l'exemple 1 a été versé avant gélification dans une chambre fermée (étape a). Le réacteur est ensuite chauffé par l'application d'un champ de microondes jusqu'à obtenir une température d'environ 120°C dans la masse des réactifs (étape b). La pression à l'intérieur du réacteur est alors de 5 bars absolus. La température de consigne de gélification complète est indiquée dans le tableau. La durée de l'étape b) est de tg1 minutes.

Ensuite, de l'acide chlorhydrique (jusqu'à pH=1) et de l'hexaméthyldisiloxane (agent hydrophobant) sont introduits dans le réacteur de manière à recouvrir totalement l'alcogel. On observe une faible chute de température (étape c). Le milieu réactionnel est chauffé par l'application d'un champ de micro-ondes pour atteindre à nouveau une température de consigne indiquée dans le tableau ci-dessous. La durée de l'étape c) est de tg2 minutes.

La température de consigne d'hydrophobisation est dans ce cas identique à la température de consigne de gélification complète.

Puis, les microondes sont arrêtées, et le milieu réactionnel est séparé de l'alcogel de silice hydrophobe par percolation.

L'alcogel est ensuite séché en étuve ventilée à 160°C pendant 2 heures (étape d). L'aérogel obtenu sous forme de granules présente une masse volumique apparente (en kg/m³) présentée dans le tableau ci-dessous.

| Température de consigne ($T_b$ et $T_c$)(°C) | durée tg1 (min) | durée tg2 (min) | Masse volumique apparente (kg/m3) |
|---|---|---|---|
| 85 | 6 | 6 | 180 |
| 100 | 8 | 8 | 85 |
| 120 | 8 | 8 | 60 |
| 120 | 18 | 18 | 50 |
| 120 | 33 | 33 | 50 |
| 150 | 31 | 31 | 45 |

On constate sur cet exemple que, lorsque la température est inférieure à 100°C, et sur des temps courts (tg1 = 6 minutes), la masse volumique apparente de l'aérogel obtenu est supérieure à 150 kg.m$^{-3}$ . Dans ce cas, les performances de l'aérogel obtenus seront insuffisantes, également en termes d'isolation thermique et de performances mécaniques.

## Exemple comparatif 5 :

2 L de sol de silice de l'exemple 1 a été versé avant gélification dans une chambre fermée (étape a). Le réacteur est ensuite chauffé par l'application d'un champ de microondes jusqu'à obtenir une température d'environ 120°C (température de consigne de gélification complète) dans la masse des réactifs (étape b). La pression à l'intérieur du réacteur est alors de 5 bars absolus. La température de consigne de gélification complète est d'environ 120°C. La durée de l'étape b) est de 6 minutes (tg1).

Ensuite, de l'acide chlorhydrique (jusqu'à pH=1) et de l'hexaméthyldisiloxane (agent hydrophobant) sont introduits dans le réacteur de manière à recouvrir totalement l'alcogel. On observe une faible chute de température (étape c). Le milieu réactionnel est chauffé par l'application d'un champ de microondes pour atteindre à nouveau une température d'environ 120°C (température de consigne d'hydrophobisation). La durée de l'étape c) est de 9 minutes (tg2). Puis, les microondes sont arrêtées, et le milieu réactionnel est séparé de l'alcogel de silice hydrophobe par percolation.

Le temps global de réaction (étapes a), b) et c)) est donc d'environ 15 minutes, tout comme dans l'exemple 1, mais avec une durée tg1 de 6 minutes au lieu de 7.5 minutes.

L'alcogel est ensuite séché en étuve ventilée à 160°C pendant 2 heures (étape d). L'aérogel obtenu sous forme de granules présente une masse volumique apparente de 140 kg/m$^3$ et une conductivité thermique de 32 mW/m.K, mesurée selon la méthode de la plaque chaude gardée de la norme NF EN 12667 à 20°C et pression atmosphérique.

Dans ce cas, la durée tgl, et par conséquent tl, était insuffisante pour que l'aérogel possède une conductivité thermique inférieure ou égale à 25 mW/m.K.

## Exemple 6 : Préparation d'un aérogel selon l'invention avec chauffage convectif lors de l'étape c)

2 L de sol de silice de l'exemple 1 a été versé avant gélification dans une chambre fermée (étape a). Le réacteur est ensuite chauffé par l'application d'un champ de microondes jusqu'à obtenir une température d'environ 120°C (température de consigne de gélification complète) dans la masse des réactifs (étape b). La pression à l'intérieur du réacteur est alors de 5 bars absolus. La température de consigne de gélification complète est d'environ 120°C, et la durée de l'étape b) est de 7.5 minutes (tg1).

Ensuite, de l'acide chlorhydrique (jusqu'à pH=1) et de l'hexaméthyldisiloxane (agent hydrophobant) sont introduits dans le réacteur de manière à recouvrir totalement l'alcogel. On observe une faible chute de température. Le milieu réactionnel est chauffé par chauffage convectif à 70°C dans une étuve pendant 12 heures (étape c). Puis le milieu réactionnel est séparé de l'alcogel de silice hydrophobe par percolation.

L'alcogel est ensuite séché en étuve ventilée à 160°C pendant 2 heures (étape d). L'aérogel obtenu sous forme de granules présente une masse volumique apparente de 63 kg/m$^3$ et une conductivité thermique de 19.5 mW/m.K, mesurée selon la méthode de la plaque chaude gardée de la norme NF EN 12667 à 20°C et pression atmosphérique.

## Exemple comparatif 7 :

100 mL de sol de silice de l'exemple 1 a été versé avant gélification dans une chambre fermée ou autoclave (étape a). L'autoclave est ensuite chauffé dans une étuve à une température de 120°C (étape b), pendant 30 minutes (tg1).

Ensuite, l'autoclave est ensuite refroidi pendant 15 minutes. Puis, la chambre est ouverte, et de l'acide chlorhydrique (jusqu'à pH=1) et de l'hexaméthyldisiloxane (agent hydrophobant) sont introduits dans le réacteur de manière à recouvrir totalement l'alcogel. L'autoclave est refermé puis est à nouveau chauffé dans une étuve à une température de 120°C (étape c), pendant 120 minutes (tg2). Puis, le chauffage est arrêté et le milieu réactionnel est séparé de l'alcogel de silice hydrophobe par percolation. L'alcogel est ensuite séché en étuve ventilée à 160°C pendant 2 heures (étape d). L'aérogel ainsi obtenu présente une masse volumique apparente de 237 kg/m$^3$, ce qui est proche de la densité du verre. Or, avec une telle masse volumique, l'aérogel ne peut présenter une conductivité thermique $\lambda$ inférieure ou égale à 25 mW/m.K (mesurée selon la méthode de la plaque chaude gardée de la norme NF EN 12667 à 20°C et pression atmosphérique).

Ainsi, la durée tgl, et par conséquent tl, était insuffisante pour que l'aérogel présente des performances satisfaisantes, également en termes d'isolation thermique et de performances mécaniques.

## Revendications

1. Procédé de fabrication d'un aérogel inorganique comprenant les étapes successives suivantes :

a) formation ou coulage d'un sol inorganique dans un réacteur, optionnellement en présence d'un matériau de renforcement et/ou un additif,

b) gélification complète du sol en un lyogel, l'étape b) de gélification complète comprenant un chauffage diélectrique par irradiation électro-magnétique microonde de fréquence comprise entre 400 et 18000 MHz, ou de fréquence comprise entre 1 et 400 MHz induisant une montée en température pour atteindre une température de consigne de gélification complète $T_b$ dans une gamme allant de 100°C à 200°C, de préférence de 100°C à 150°C, $T_b$ étant supérieure au point d'ébullition du solvant et la pression absolue dans le réacteur à l'étape b) étant comprise entre 1,5 et 12 bar,

la température $T_b$ étant maintenue dans cette gamme pendant une durée $t_1$ suffisante pour atteindre la fin de la gélification complète, et plus particulièrement la fin de la synérèse du lyogel ;

c) optionnellement hydrophobisation du lyogel conduisant à un lyogel hydrophobé, l'hydrophobisation étant obligatoire lorsque le séchage de l'étape d) est effectué dans des conditions subcritiques;

d) séchage du lyogel éventuellement hydrophobé pour obtenir un aérogel inorganique.

2. Procédé selon la revendication 1, **caractérisé en ce que** la durée $t_1$ est d'au moins 6 minutes et inférieure ou égale à 1 heure.

3. Procédé selon l'une quelconque des revendications 1 et 2, **caractérisé en ce que** la température de $T_b$ est comprise entre 110°C et 130°C.

4. Procédé selon l'une quelconque des revendications 1 à 3, **caractérisé en ce que** la température $T_b$ est maintenue dans la gamme visée par chauffage diélectrique par irradiation électro-magnétique de fréquence comprise entre 1 et 400 MHz ou microondes.

5. Procédé selon la revendication 4, **caractérisé en ce que** la durée totale $t_{g1}$ du chauffage diélectrique par irradiation électro-magnétique haute fréquence ou microondes à l'étape b) est d'au moins 7 minutes et inférieure ou égale à 1 heure.

6. Procédé selon l'une quelconque des revendications 1 à 5, **caractérisé en ce que** l'étape c) d'hydrophobisation implique un chauffage pour atteindre une température de consigne d'hydrophobisation $T_c$ dans une gamme allant de 60°C à 200°C, de préférence de 70°C à 150°C, la température $T_c$ étant maintenue dans cette gamme pendant une durée $t_2$ suffisante pour l'hydrophobisation du lyogel.

7. Procédé selon la revendication 6, **caractérisé en ce que** le chauffage de l'étape c) est mis en oeuvre par chauffage diélectrique par irradiation électro-magnétique de fréquence comprise entre 1 et 400 MHz ou microondes.

8. Procédé selon la revendication 7, **caractérisé en ce que** la durée $t_2$ est d'au moins 6 minutes et inférieure ou égale à 1 heure.

9. Procédé selon l'une quelconque des revendications 6 à 8, **caractérisé en ce que** la température $T_c$ est identique à la température $T_b$.

10. Procédé selon l'une quelconque des revendications 1 à 9, **caractérisé en ce que** le champ électro-magnétique haute fréquence ou microondes appliqué pour le chauffage diélectrique lors de l'étape b) et/ou c) et/ou d) est homogène dans le lyogel.

11. Procédé selon l'une quelconque des revendications 1 à 10, **caractérisé en ce que** le sol est un sol inorganique de silice.

12. Procédé selon l'une quelconque des revendications 1 à 11, **caractérisé en ce que** le lyogel est un alcogel.

13. Procédé selon l'une quelconque des revendications 1 à 12, **caractérisé en ce que** l'étape d) de séchage est mise en oeuvre dans des conditions subcritiques, par exemple par séchage thermique ou diélectrique.

14. Procédé selon l'une quelconque des revendications 1 à 13, **caractérisé en ce que** l'aérogel obtenu par le procédé possède une conductivité thermique $\lambda$ inférieure ou égale à 25 mW/m.K, avantageusement inférieure ou égale à 21 mW/m.K, mesurée selon la méthode de la plaque chaude gardée de la norme NF EN 12667 à 20°C et à pression atmosphérique.

15. Procédé selon l'une quelconque des revendications 1 à 14, **caractérisé en ce que** l'aérogel obtenu par le procédé possède une masse volumique apparente inférieure ou égale à 150 kg. m$^{-3}$.

**Patentansprüche**

1. Verfahren zur Herstellung eines anorganischen Aerogels, das die folgenden aufeinanderfolgenden Schritte umfasst:

   a) Bilden oder Gießen eines anorganischen Sols in einem/n Reaktor, gegebenenfalls in Gegenwart eines Verstärkungsmaterials und/oder eines Zusatzstoffs,
   b) vollständiges Gelieren des Sols zu einem Lyogel, wobei der Schritt b) des vollständigen Gelierens ein dielektrisches Erwärmen durch elektromagnetische Mikrowellenbestrahlung mit einer Frequenz zwischen 400 und 18000 MHz, oder einer Frequenz zwischen 1 und 400 MHz umfasst, das einen Temperaturanstieg induziert, um eine Solltemperatur zum vollständigen Gelieren $T_b$ in einem Bereich von 100 °C bis 200 °C, vorzugweise 100 °C bis 150 °C zu erreichen, wobei $T_b$ höher ist als der Siedepunkt des Lösungsmittels, und der absolute Druck im Reaktor im Schritt b) zwischen 1,5 und 12 Bar liegt,
wobei die Temperatur $T_b$ während einer Dauer $t_1$, die ausreicht, um das Ende des vollständigen Gelierens, und spezieller das Ende der Synärese des Lyogels zu erreichen, in diesem Bereich gehalten wird;
c) gegebenenfalls Hydrophobieren des Lyogels, das zu einem hydrophobierten Lyogel führt, wobei das Hydrophobieren obligatorisch ist, wenn das Trocknen aus dem Schritt
d) unter subkritischen Bedingungen ausgeführt wird;
d) Trocknen des gegebenenfalls hydrophobierten Lyogels, um ein anorganisches Aerogel zu erhalten.

2. Verfahren nach Anspruch 1, **dadurch gekennzeichnet, dass** die Dauer $t_1$ mindestens 6 Minuten und weniger als oder gleich 1 Stunde beträgt.

3. Verfahren nach einem der Ansprüche 1 und 2, **dadurch gekennzeichnet, dass** die Temperatur von $T_b$ zwischen 110 °C und 130 °C liegt.

4. Verfahren nach einem der Ansprüche 1 bis 3, **dadurch gekennzeichnet, dass** die Temperatur $T_b$ durch dielektrisches Erwärmen durch elektromagnetische Bestrahlung mit einer Frequenz zwischen 1 und 400 MHz oder Mikrowellen im anvisierten Bereich gehalten wird.

5. Verfahren nach Anspruch 4, **dadurch gekennzeichnet, dass** die Gesamtdauer $t_{g1}$ des dielektrischen Erwärmens durch elektromagnetische Hochfrequenzbestrahlung oder Mikrowellen im Schritt b) mindestens 7 Minuten und weniger als oder gleich 1 Stunde beträgt.

6. Verfahren nach einem der Ansprüche 1 bis 5, **dadurch gekennzeichnet, dass** der Schritt c) des Hydrophobierens ein Erwärmen impliziert, um eine Hydrophobierungs-Solltemperatur $T_c$ in einem Bereich von 60 °C bis 200 °C, vorzugsweise 70 °C bis 150 °C zu erreichen, wobei die Temperatur $T_c$ während einer Dauer $t_2$, die für das Hydrophobieren des Lyogels ausreicht, in diesem Bereich gehalten wird.

7. Verfahren nach Anspruch 6, **dadurch gekennzeichnet, dass** das Erwärmen aus dem Schritt c) durch dielektrisches Erwärmen durch elektromagnetische Bestrahlung mit einer Frequenz zwischen 1 und 400 MHz oder Mikrowellen umgesetzt wird.

8. Verfahren nach Anspruch 7, **dadurch gekennzeichnet, dass** die Dauer $t_2$ mindestens 6 Minuten und weniger als oder gleich 1 Stunde beträgt.

9. Verfahren nach einem der Ansprüche 6 bis 8, **dadurch gekennzeichnet, dass** die Temperatur $T_c$ mit der Temperatur $T_b$ identisch ist.

10. Verfahren nach einem der Ansprüche 1 bis 9, **dadurch gekennzeichnet, dass** das elektromagnetische Hochfrequenz- oder Mikrowellenfeld, das für das dielektrische Erwärmen beim Schritt b) und/oder c) und/oder d) angewendet wird, im Lyogel homogen ist.

11. Verfahren nach einem der Ansprüche 1 bis 10, **dadurch gekennzeichnet, dass** das Sol ein anorganisches Kieselsol ist.

12. Verfahren nach einem der Ansprüche 1 bis 11, **dadurch gekennzeichnet, dass** das Lyogel ein Alkogel ist.

13. Verfahren nach einem der Ansprüche 1 bis 12, **dadurch gekennzeichnet, dass** der Schritt d) des Trocknens unter subkritischen Bedingungen, zum Beispiel durch thermisches oder dielektrisches Trocknen umgesetzt wird.

14. Verfahren nach einem der Ansprüche 1 bis 13, **dadurch gekennzeichnet, dass** das durch das Verfahren erhaltene Aerogel, nach dem Verfahren mit dem Plattengerät der Norm NF EN 12667 bei 20 °C und bei Atmosphärendruck gemessen, eine Wärmeleitfähigkeit $\lambda$ von weniger als oder gleich 25 mW/m.K, vorteilhafterweise weniger als oder gleich 21 mW/m.K besitzt.

15. Verfahren nach einem der Ansprüche 1 bis 14, **dadurch gekennzeichnet, dass** das durch das Verfahren erhaltene Aerogel eine Schüttdichte von weniger als oder gleich 150 kg.m$^{-3}$ besitzt.

**Claims**

1. Method for manufacturing an inorganic aerogel comprising the following successive steps:

   a) formation or pouring of an inorganic sol into a reactor, optionally in the presence of a reinforcing material and/or an additive,
   b) complete gelation of the sol into a lyogel, the step b) of complete gelation comprising dielectric heating by microwave electromagnetic irradiation having a frequency between 400 and 18000MHz, or having a frequency between 1 and 400MHz leading to a rise in temperature in order to reach a setting temperature for complete gelation $T_b$ in a range from 100°C to 200°C, preferably from 100°C to 150°C,
   $T_b$ being greater than the boiling point of the solvent and the absolute pressure in the reactor in step b) being between 1.5 and 12 bar,
   the temperature $T_b$ being maintained in this range for a time $t_1$ sufficient for reaching the end of the complete gelation, and more particularly the end of the syneresis of the lyogel;
   c) optionally, hydrophobisation of the lyogel leading to a hydrophobic lyogel, the hydrophobisation being mandatory when the drying of step d) is carried out in subcritical conditions;
   d) drying of the optionally hydrophobic lyogel in order to obtain an inorganic aerogel.

2. Method according to claim 1, **characterised in that** time $t_1$ is at least 6 minutes and less than or equal to 1 hour.

3. Method according to any one of claims 1 and 2, **characterised in that** temperature $T_b$ is comprised between 110°C and 130°C.

4. Method according to any one of claims 1 to 3, **characterised in that** temperature $T_b$ is maintained in the targeted range by dielectric heating by electromagnetic irradiation having a frequency between 1 and 400MHz or microwaves.

5. Method according to claim 4, **characterised in that** total time $t_{g1}$ of the dielectric heating by high-frequency electromagnetic irradiation or microwaves in step b) is at least 7 minutes and less than or equal to 1 hour.

6. Method according to any one of claims 1 to 5, **characterised in that** step c) of hydrophobisation involves heating in order to reach a setting temperature for hydrophobisation $T_c$ in a range from 60°C to 200°C, preferably from 70°C to 150°C, the temperature $T_c$ being maintained in this range for a time $t_2$ sufficient for the hydrophobisation of the lyogel.

7. Method according to claim 6, **characterised in that** the heating of step c) is implemented by dielectric heating by electromagnetic irradiation having a frequency between 1 and 400MHz or microwaves.

8. Method according to claim 7, **characterised in that** time $t_2$ is at least 6 minutes and less than or equal to 1 hour.

9. Method according to any one of claims 6 to 8, **characterised in that** temperature $T_c$ is identical to temperature $T_b$.

10. Method according to any one of claims 1 to 9, **characterised in that** the high-frequency or microwave electromagnetic field applied for the dielectric heating in step b) and/or c) and/or d) is homogenous in the lyogel.

11. Method according to any one of claims 1 to 10, **characterised in that** the sol is an inorganic sol of silica.

12. Method according to any one of claims 1 to 11, **characterised in that** the lyogel is an alcogel.

13. Method according to any one of claims 1 to 12, **characterised in that** step d) of drying is implemented in subcritical conditions, for example by thermal or dielectric drying.

14. Method according to any one of claims 1 to 13, **characterised in that** the aerogel obtained by the method has a thermal conductivity $\lambda$ less than or equal to 25 mW/m.K, advantageously less than or equal to 21mW/m.K, measured according to the guarded hot plate method of the standard NF EN 12667 at 20°C and at atmospheric pressure.

15. Method according to any one of claims 1 to 14, **characterised in that** the aerogel obtained by the method has an apparent density less than or equal to 150kg. $m^{-3}$.

Figure 1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2873677
- WO 2013053951 A
- US 20040087670 A
- US 20120112388 A
- US 5811031 A
- US 5705535 A
- US 20070119344 A
- CN 201793378
- US 6887563 B

**Littérature non-brevet citée dans la description**

- **WENZHI ZHENG et al.** *Advanced Materials Research,* 2010, vol. 148-149, 1152-1162
- **C. S. ASHLEY ; C. J. BRINKER ; D. M. SMITH.** *Journal of Non-Crystalline Solids,* 2001, vol. 285